# EUROPEAN PATENT SPECIFICATION

(11) **EP 4 023 391 B1**
(45) Date of publication and mention of the grant of the patent: **24.07.2024**
(21) Application number: 21213813.5
(22) Date of filing: 10.12.2021
(51) Int. Cl.: B29C 63/02, B24B 7/06, B24B 7/28, B24B 7/30

(54) **METHOD FOR WORKING A WORKPIECE MADE OF WOOD AND WORKING PLANT FOR IMPLEMENTING THE METHOD**
VERFAHREN ZUR BEARBEITUNG EINES WERKSTÜCKS AUS HOLZ UND BEARBEITUNGSEINRICHTUNG ZUR DURCHFÜHRUNG DES VERFAHRENS
PROCÉDÉ D'USINAGE D'UNE PIECE EN BOIS ET INSTALLATION D'USINAGE POUR LA MISE EN OUVRE DU PROCÉDÉ

(30) Priority: 30.12.2020 IT 202000032729
(43) Date of publication of application: 06.07.2022
(73) Proprietor: SCM Group S.p.A., 47921 Rimini (RN) (IT)
(72) Inventor: VENTURINI, Marco, 47921 Rimini (IT)
(74) Representative: Tiburzi, Andrea

(56) References cited:
- CN-A- 111 361 342
- GB-A- 2 263 884
- KR-A- 20110 069 982

## Description

The present invention relates to a method of working workpiece made of wood, in particular the decoration and lamination of pieces.

The present invention also relates to a plant for working workpieces made of wood, which implements the method, in particular a sanding type machine, equipped with a decoration unit and a pressing unit, and a sanding unit.

More in detail, the invention relates to a method of working workpieces made of wood or other materials too, such as plastic, glass, fiberglass, metal, ceramic, and the like, in particular for the decoration by means of a laser source and the subsequent lamination, but which can be used for any decoration of a wooden workpiece.

In the following, the description will address a method for decorating a workpiece made of wood by means of a laser source, and for subsequently laminating it, but it is clear that it should not be considered limited to this specific use.

As is well known, currently there exist methods and machines for working workpieces made of wood, in particular for decorating the workpieces with veins or geometric shapes or for impressing various kinds of decorations on the workpiece.

These known machines are pressing machines, which carry out the working on the workpieces by pressing rollers.

In particular, the machines equipped with rollers, on the surface of which there are veins, geometric shapes, and other kinds of decorative elements, are known.

Each roller rotates on a workpiece by compressing it, thus allowing to impress on the surface of the workpiece the decoration on the surface of the roller itself.

To ennoble the workpiece, the latter is subsequently inserted into an autoclave device, where an ennobled layer is applied on the worked surface of the workpiece.

Due to the heat and the pressure of the autoclave device, the ennobled layer adheres to the worked surface of the workpiece, assuming the same conformation as the worked surface of the workpiece.

Additionally known machines apply decorated surfaces or pre-printed cards on the workpieces by pressure.

As is apparent, these known methods and machines provide for long working times, which are sometimes harmful to the workpieces, due to the pressure applied by the roller on the workpiece itself.

Furthermore, to vary the working on a workpiece or on following workpieces, it is necessary to replace the roller in the machine for exerting a roller that has a surface with a different decorative element.

A further disadvantage of the prior art is that the dimensions of the decorations to be carried out on the workpieces are limited by the physical sizes of the rollers or of the pre-printed cards.

The prior art also comprises the patent applications GB 2 263 884 A, KR 2011 0069982 A and CN 111 361 342 A.

In the light of the above, it is, therefore, an object of the present invention to provide a method for processing wooden pieces that performs a fast and safe decoration machining for the workpiece and the subsequent lamination.

Another object of the invention is to provide a method for working pieces by means of which it is possible to impress on the same piece, or on following pieces, different decorative elements, which can be modified quickly.

Another object of the present invention is to provide a method that allows the entire surface of the piece to be decorated.

A further object of the present invention is to provide a plant, which implements the method of machining wooden pieces.

It is, therefore, a specific object of the present invention a method for working a workpiece made of wood, plastic, glass, fiberglass, metal, ceramic, comprising the following steps:
*a.* providing a workpiece to be worked in a working plant, according to a forward direction;
*b.* carrying out the decoration of the workpiece according to a predetermined decoration program, along a working direction, orthogonal to said forward direction, while said workpiece moves along said forward direction; and
*c.* carrying out the pressing of a layer of noble material on said decorated workpiece.

Further according to the invention, said decoration carried out in said step *b.* is a removal of material by means of a laser source or a print by means of a print head or a painting.

Still according to the invention, said method may comprise the following step:
*b1.* detecting the quality of the decoration carried out in said step b., if the decoration corresponds to the predetermined decoration program, carrying out said step *c.*

Preferably according to the invention, said method comprises the following step:
*a1.* detecting the features of the workpiece to be worked, and/or an input data, and selecting the decoration program to carry out.

It is further object of the present invention, a working plant for working a workpiece made of wood, plastic, glass, fiberglass, metal, ceramic, comprising a machine capable of carrying out a decoration on a workpiece by means of a decoration unit, and comprising a pressing or laminating unit capable of pressing a layer of noble material on said decorated workpiece.

Further according to the invention, said plant may comprise a second detecting device arranged between said machine and said pressing or laminating unit capable of detecting the quality of the decoration carried out on said workpiece.

Still according to the invention, said plant may comprise a first detecting device arranged at the entry of said machine, capable of detecting the features of said workpiece.

Preferably according to the invention, said plant may comprise a logic control unit in which decoration programs to carry out on said workpiece are stored.

Always according to the invention, said logic control unit is capable of receiving signals corresponding to the quality of decoration detected by said detecting device and sending correspondingly said workpiece to said pressing or laminating unit.

Further according to the invention, said logic control unit is capable of receiving signals corresponding to the features detected by said first detecting device and selecting correspondingly the decoration program to carry out on said workpiece.

Still according to the invention, said machine (M) comprises an entry station for the entry of said workpiece to be worked and an exit station for the exit of said worked workpiece, a conveyor group for moving said workpiece to be worked, according to a forward direction, from said entry station towards said exit station; a decoration unit capable of carrying out a decoration on said workpiece, and at least one working unit, in particular a sanding unit, of said workpiece, arranged elevated with respect to said conveyor group comprising at least one working tool, in particular for sanding said workpiece.

Preferably according to the invention, said machine comprises an entry station for the entry of said workpiece to be worked and an exit station for the exit of the worked workpiece, a conveyor group for moving said workpiece to be worked, according to a forward direction, from said entry station towards said exit station, and a decoration unit capable of carrying out a decoration on said workpiece.

It is further object of the present invention a machine for working a workpiece made of wood, plastic, glass, fiberglass, metal, ceramic, comprising an entry station for the entry of said workpiece to be worked and an exit station for the exit of the worked workpiece, a conveyor group for moving said workpiece to be worked, according to a forward direction, from said entry station towards said exit station, a decoration unit capable of carrying out a decoration on said workpiece, and a pressing or laminating unit capable of pressing a layer of noble material on said decorated workpiece.

Still according to the invention, said decoration unit is a laser source or a print head, or a painting unit.

The present invention will be now described, for illustrative but not limitative purposes, according to its preferred embodiments, with particular reference to the figures of the enclosed drawings, wherein:
figure 1 shows a flowchart of the method for working workpieces made of wood, object of the present invention;
figure 2 shows a perspective side view of a first embodiment of the plant, which implements the working method, object of the present invention;
figure 3 shows a side view of the plant of figure 2;
figure 4 shows a top perspective view of the plant of figure 2;
figure 5 shows a side view of a second embodiment of the plant, which implements the working method, object of the present invention;
figure 6 shows a side perspective view of the plant of figure 5; and
figure 7 shows a top perspective view of the plant of figure 5.

In the various figures, similar parts will be indicated with the same numerical references.

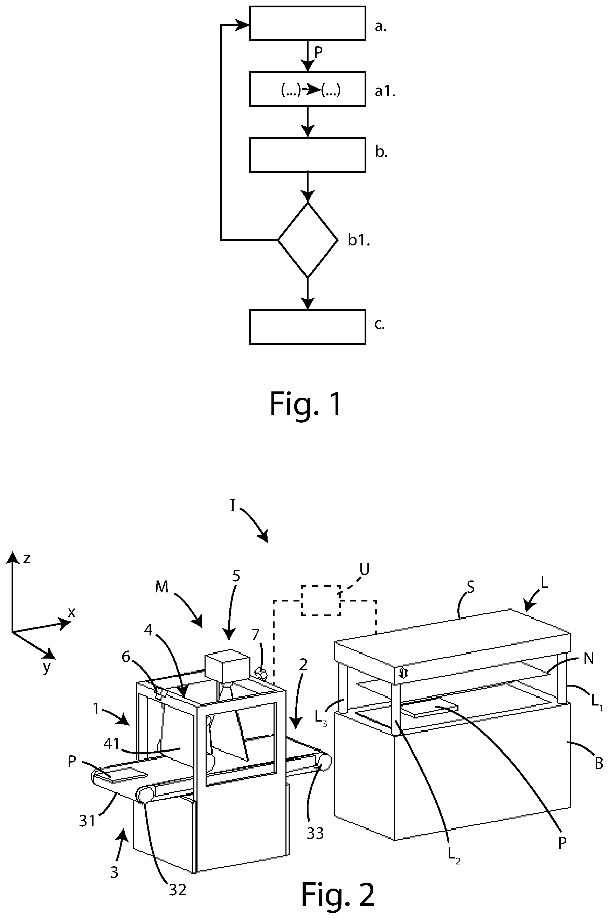

With reference to figure 1, the method for working wooden workpieces, object of the present invention, essentially comprises the steps of inserting a workpiece P to be worked in the plant, carrying out the decoration on the workpiece, performing the laminating of the workpiece.

The workpiece P is essentially a panel such as furniture doors, or parquet strips, made of non-noble material that is subsequently ennobled by means of the method in at issue.

The machining that is performed is the sanding or brushing or a working by using a laser source or printing or painting on the workpiece P.

Once the working of the workpiece is over, it is possible to perform the lamination, which consists in superimposing an ennobled layer on the worked surface of the workpiece, in order to give mechanical stability and impermeability to the workpiece.

In the method, it is possible to provide a verification step of the quality of the working, to decide whether to laminate the workpiece or not.

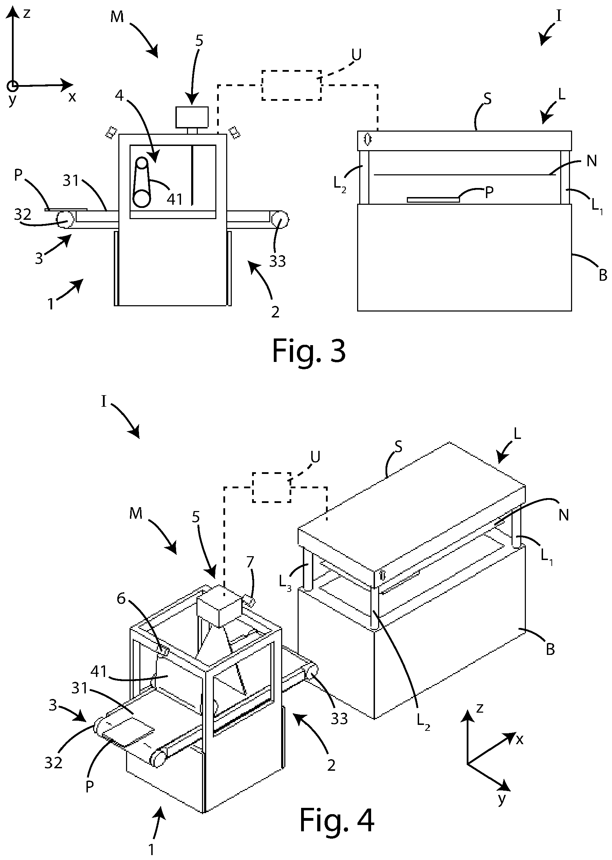

With reference to figures 2-4, the working plant I, object of the present invention, which implements the method described above, in a first embodiment, essentially comprises a machine M for working the workpiece P, a pressing or laminating unit L of the workpiece P, and a logic control unit U, operatively connected to said machine M and to said pressing or laminating unit L, for the operation of the plant I.

Said machine M substantially comprises an entry station 1, where the workpieces P to be worked are inserted according to a first axis or forward direction X, an exit station 2 from which worked workpieces P exit, according to the same direction X, a conveyor group 3, for transporting the workpieces P to be worked according to said forward direction X, from said entry station 1, towards said exit station 2, at least one working unit 4 for carrying out a working, in particular sanding, on said workpieces P to be worked, and a decoration unit 5 for decorating said workpieces P.

In particular, in said entry station 1, a workpiece P is placed on said conveyor group 3.

Said conveyor group 3 comprises a conveyor belt 31, on which the workpiece P to be worked is placed and transported from said entry station 1 towards said exit station 2, according to the forward direction X, and a first 32 and a second 33 shaft, which rotates said conveyor belt 31.

Said at least one working unit 4 is arranged above said conveyor group 3 and it extends according to a third axis or development direction Z, orthogonal to said forward direction X.

Said at least one working unit 4 comprises at least one sanding tool 41, provided with an abrasive surface, facing the underlying conveyor belt 31, for contacting with the upper surface of the workpiece P, arranged above the same conveyor belt 31.

Said sanding tool 41 can also be an abrasive roller, or a rotary disk, such as a sanding pad, or a brush, or a tool with cutting elements.

Said working unit 4 carries out the sanding of the workpiece P according to a second axis, or working direction Y, which is orthogonal to the plane identified by said forward direction X and the development direction Z.

Said working unit 4 can also comprise several sanding tools 41.

Said decoration unit 5 is arranged in said working unit 4, between said at least one working tool 41, and said exit station 2, for decorating said workpiece P.

In particular, said decoration unit 5 is used to decorate said workpiece P, following the main sanding workings carried out by the previous working groups.

Said decoration unit 5 can be a laser source or a printing head or a painting unit.

Said decoration unit 5 also carries out the working on said workpiece P by moving along said working direction Y, while the workpiece P moves forward along said forward direction X.

If said decoration unit 5 is a laser source, the workings are carried out on the workpiece P according to predetermined decoration programs, in order to decorate the workpiece with veins, stripes, geometric effects, and the like, on the whole surface of the workpiece or on part of it, by removing material.

If said decoration unit 5 is a print head, the workings are carried out on the workpiece P according to predetermined decoration programs, in order to decorate the workpiece with prints, images, and the like, on the whole surface of the workpiece or on part of it.

If said decoration unit 5 is a painting unit, the workings are carried out on the workpiece P according to predetermined decoration programs, in order to paint the whole surface of the workpiece or part of it.

Said first detecting device 6 is arranged in said entry station 1, elevated above said conveyor belt 31 and is operatively connected to said logic control unit U.

Said working center C comprises a first detecting device 6.

Said first detecting device 6 is capable of detecting one or more features of the workpiece P while entering into said plant I, such as for example the sizes of said workpiece P and/or the material of said workpiece P and/or the position of said workpiece P on said conveyor belt 31, in particular the rotation of the workpiece P on the plane XY, with respect to the forward direction X, and/or an input data, and to send corresponding signals to said logic control unit U.

Said first detecting device 6 is a camera or an optical sensor.

Said machine M comprises a second detecting device 7.

Said second detecting device 7 is arranged in said exit station 2, elevated above said conveyor belt 31, and it is operatively connected to said logic control unit U.

Said second detecting device 7 is capable of controlling the working carried out on said workpiece P, in particular of detecting the depth of the marking on the workpiece P, the shade of the workpiece P after the working, the resolution, and correspondence with respect to the input working.

Said pressing or laminating unit L comprises a base B, on which the workpiece P to be laminated is placed, a pressing member S, which is moved, with respect to said base, by means of a plurality of hydraulic cylinders L1, L2, L3, and L4, in order to apply, by pressing, a layer of noble material N on said workpiece P.

Said logic control unit U comprises processing programs to be carried out on said workpiece P by means of said working unit 4, and it is operatively connected to said working unit 4.

Said logic control unit U also comprises the decoration programs to be carried out on said workpiece P by means of said decoration unit 5, and it is operatively connected with said decoration unit 5.

Said logic control unit U is able to receive the signals coming from said second detecting device 7 and to consequently activate the laminating unit L.

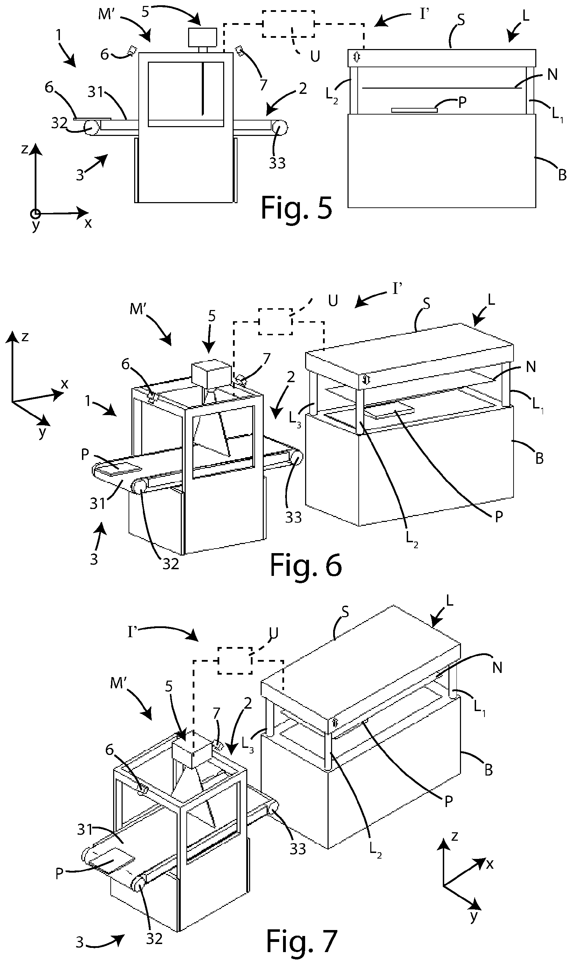

Referring now to figures 5-7, in a second embodiment of said plant l', object of the present invention, which implements the method described above, differs from the first embodiment I described above, just for the fact that it does not comprise said working unit 4. Therefore, the workpieces P are only decorated by said decoration unit 5, as described above.

In a third embodiment, not shown in the figures, it is also possible that the plant comprises a single machine comprising an entry station 1, for the entry of said workpiece P to be worked, an exit station 2, for the exit of the worked workpiece P, a conveyor group 3 for transporting said workpiece P to be worked, according to a forward direction X, from said entry station 1 towards said exit station 2, and further comprising a decoration unit 5, able to carry out a decoration on said workpiece P, and a pressing or laminating unit L, capable of pressing a layer of noble material N on said decorated workpiece P.

The operation of the plant I described above is as follows.

When decorating a workpiece P is desired, the latter is inserted in said plant I, in particular on said conveyor belt 31 in said entry station 1.

Said workpiece P is transported in said machine M according to said forward direction X.

Said first detecting device 6 detects the features of the workpiece P and sends corresponding signals to said logic control unit U, which correspondingly selects the working and the decoration program to be carried out on said workpiece P.

Said workpiece P is firstly worked by said working unit 4, according to the working program selected by said logic control unit U.

Subsequently, said workpiece P is decorated by said decoration unit 5, along said working direction Y, according to the decoration program selected by said logic control unit U, i.e. working by means of a laser, or by a printing head or by a painting unit, while the workpiece P advances along said forward direction X.

At the end of the decoration, said conveyor belt 31 transports said decorated workpiece P to said exit station 2.

Said second detecting device 7 detects the quality of the decoration of said workpiece P, and whether it corresponds to the resulting decoration from the selected decoration program, then said workpiece P is sent to said pressing or laminating unit L.

Said pressing or laminating unit L applies a layer of noble material N on said workpiece P.

In particular, said plurality of hydraulic cylinders L1, L2, L3, and L4, moves said pressing member S towards said workpiece P for pressing and adhering said layer of noble material N on said workpiece P.

The operation of the plant I' is similar to the one just described, and differs only for the fact that the workpiece P is not worked first, but is only decorated.

As is evident from the present invention, the method object of the present invention allows carrying out different decorations on said workpiece P quickly and on the whole surface of the workpiece, or part of it, according to the physical features of the workpiece.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Method for working a workpiece (P) made of wood, plastic, glass, fiberglass, metal, ceramic, comprising the following steps:
*a.* providing a workpiece (P) to be worked in a working plant (I, I'), according to a forward direction (X);
*b.* carrying out the decoration of the workpiece (P), by means of a decoration unit (5), according to a predetermined decoration program, along a working direction (Y), orthogonal to said forward direction (X), while said workpiece (P) moves along said forward direction (X), wherein said decoration is a removal of material by means of a laser source, or a print by means of a print head or a painting; and
*c.* after said step *b.,* carrying out the pressing of a layer of noble material (N) on said decorated workpiece (P), by means of a pressing or laminating unit (L).

2. Method according to the preceding claim, **characterized in that** it comprises the following step:
*b1.* detecting the quality of the decoration carried out in said step b., if the decoration corresponds to the predetermined decoration program, carrying out said step c.

3. Method according to any one of the preceding claims, **characterized in that** it comprises the following step:
*a1.* detecting the features of the workpiece (P) to be worked, and/or an input data, and selecting the decoration program to carry out.

4. Working plant (I, I') for working a workpiece (P) made of wood, plastic, glass, fiberglass, metal, ceramic, **characterized**
**in that** it comprises a machine (M, M') capable of carrying out a decoration on a workpiece (P) by means of a decoration unit (5), wherein said decoration is a removal of material by means of a laser source, or a print by means of a print head or a painting, and
**in that** it comprises a pressing or laminating unit (L) capable of pressing a layer of noble material (N) on said decorated workpiece (P).

5. Plant (I, I') according to the preceding claim, **characterized in that** it comprises a second detecting device (7) arranged between said machine (M, M') and said pressing or laminating unit (L) capable of detecting the quality of the decoration carried out on said workpiece (P).

6. Plant (I, I') according to any one of claims 4 or 5, **characterized in that** it comprises a first detecting device (6) arranged at the entry of said machine (M, M'), capable of detecting the features of said workpiece (P).

7. Plant (I, I') according to any one of claims 4-6, **characterized in that** it comprises a logic control unit (U) in which decoration programs to carry out on said workpiece (P) are stored.

8. Plant (I, I') according to the preceding claim, when dependent on claim 5, **characterized in that** said logic control unit (U) is capable of receiving signals corresponding to the quality of decoration detected by said detecting device (7) and sending correspondingly said workpiece to said pressing or laminating unit (L).

9. Plant (I, I') according to claim 7, when dependent on claim 6, **characterized in that** said logic control unit (U) is capable of receiving signals corresponding to the features detected by said first detecting device (6) and selecting correspondingly the decoration program to carry out on said workpiece (P).

10. Plant (I) according to any one of claims 4-9, **characterized in that** said machine (M) comprises:
an entry station (1) for the entry of said workpiece (P) to be worked and an exit station (2) for the exit of said worked workpiece (P);
a conveyor group (3) for moving said workpiece (P) to be worked, according to a forward direction (X), from said entry station (1) towards said exit station (2);
a decoration unit (5) capable of carrying out a decoration on said workpiece (P); and
at least one working unit (4), in particular a sanding unit, of said workpiece (P), arranged elevated with respect to said conveyor group (3) comprising at least one working tool (41), in particular for sanding said workpiece (P).

11. Plant (I') according to any one of claims 4-9, **characterized in that** said machine (M') comprises:
an entry station (1) for the entry of said workpiece (P) to be worked and an exit station (2) for the exit of the worked workpiece (P);
a conveyor group (3) for moving said workpiece (P) to be worked, according to a forward direction (X), from said entry station (1) towards said exit station (2); and
a decoration unit (5) capable of carrying out a decoration on said workpiece (P).

12. Plant (I, I') according to any one of claims 4-11, **characterized in that** said decoration unit (5) is a laser source or a print head or a painting unit.

13. Machine for working a workpiece (P) made of wood, plastic, glass, fiberglass, metal, ceramic, comprising:
an entry station (1) for the entry of said workpiece (P) to be worked and an exit station (2) for the exit of the worked workpiece (P);
a conveyor group (3) for moving said workpiece (P) to be worked, according to a forward direction (X), from said entry station (1) towards said exit station (2);
**characterized in that** it further comprises a decoration unit (5) capable of carrying out a decoration on said workpiece (P), wherein said decoration is a removal of material by means of a laser source, or a print by means of a print head or a painting and a pressing or laminating unit (L) capable of pressing a layer of noble material (N) on said decorated workpiece (P).

## Patentansprüche

1. Verfahren zur Bearbeitung eines Werkstücks (P) aus Holz, Kunststoff, Glas, Glasfaser, Metall, Keramik, umfassend die folgenden Schritte:
a. Bereitstellen eines zu bearbeitenden Werkstücks (P) in einer Bearbeitungsanlage (I, I') gemäß einer Vorwärtsrichtung (X);
b. Ausführen der Dekoration des Werkstücks (P) mittels einer Dekorationseinheit (5) gemäß einem vorbestimmten Dekorationsprogramm entlang einer Arbeitsrichtung (Y), die orthogonal zu der Vorwärtsrichtung (X) ist, während sich das Werkstück (P) entlang der Vorwärtsrichtung (X) bewegt, wobei die Dekoration ein Entfernen von Material mittels einer Laserquelle oder ein Druck mittels eines Druckkopfes oder ein Anstrich ist; und
*c.* nach dem Schritt *b.* Ausführen des Pressens einer Schicht aus edlem Material (N) auf das dekorierte Werkstück (P) mittels einer Press- oder Laminiereinheit (L).

2. Verfahren nach dem vorhergehenden Anspruch, **dadurch gekennzeichnet, dass** es den folgenden Schritt umfasst: *b1.* Erfassen der Qualität der im Schritt b. durchgeführten Dekoration, wenn die Dekoration dem vorbestimmten Dekorationsprogramm entspricht, Ausführen des Schrittes *c.*

3. Verfahren nach einem der vorhergehenden Ansprüche, **dadurch gekennzeichnet, dass** es den folgenden Schritt umfasst:
*a1.* Erfassen der Merkmale des zu bearbeitenden Werkstücks (P) und/oder einer Eingangsinformation und Auswählen des auszuführenden Dekorationsprogramms.

4. Anlage (I, I') zur Bearbeitung eines Werkstücks (P) aus Holz, Kunststoff, Glas, Glasfaser, Metall, Keramik, **dadurch gekennzeichnet, dass**
sie eine Maschine (M, M') umfasst, die in der Lage ist, eine Dekoration auf einem Werkstück (P) mittels einer Dekorationseinheit (5) auszuführen, wobei die Dekoration ein Abtragen von Material mittels einer Laserquelle oder ein Druck mittels eines Druckkopfes oder eine Lackierung ist, und dass sie eine Press- oder Laminiereinheit (L) umfasst, die in der Lage ist, eine Schicht aus edlem Material (N) auf das dekorierte Werkstück (P) zu pressen.

5. Anlage (I, I') nach dem vorhergehenden Anspruch, **dadurch gekennzeichnet, dass** sie eine zweite Erfassungsvorrichtung (7) umfasst, die zwischen der Maschine (M, M') und der Press- oder Laminiereinheit (L) angeordnet und in der Lage ist, die Qualität der auf dem Werkstück (P) ausgeführten Dekoration zu erfassen.

6. Anlage (I, I') nach einem der Ansprüche 4 oder 5, **dadurch gekennzeichnet, dass** sie eine erste Erfassungsvorrichtung (6) umfasst, die am Eingang der Maschine (M, M') angeordnet und in der Lage ist, die Merkmale des Werkstücks (P) zu erfassen.

7. Anlage (I, I') nach einem der Ansprüche 4 bis 6, **dadurch gekennzeichnet, dass** sie eine logische Steuereinheit (U) umfasst, in der die an dem Werkstück (P) auszuführenden Dekorationsprogramme gespeichert sind.

8. Anlage (I, I') nach dem vorhergehenden Anspruch, wenn sie von Anspruch 5 abhängt, **dadurch gekennzeichnet, dass** die logische Steuereinheit (U) in der Lage ist, Signale zu empfangen, die der von der Erfassungsvorrichtung (7) erfassten Qualität der Dekoration entsprechen, und das Werkstück entsprechend an die Press- oder Laminiereinheit (L) zu senden.

9. Anlage (I, I') nach Anspruch 7, wenn sie von Anspruch 6 abhängt, **dadurch gekennzeichnet, dass** die logische Steuereinheit (U) in der Lage ist, Signale zu empfangen, die den von der ersten Erfassungsvorrichtung (6) erfassten Merkmalen entsprechen, und dementsprechend das an dem Werkstück (P) auszuführende Dekorationsprogramm auszuwählen.

10. Anlage (I) nach einem der Ansprüche 4 bis 9, **dadurch gekennzeichnet, dass** die Maschine (M) umfasst:
eine Eingangsstation (1) für den Eingang des zu bearbeitenden Werkstücks (P) und eine Ausgangsstation (2) für den Ausgang des bearbeiteten Werkstücks (P);
eine Fördergruppe (3) zum Bewegen des zu bearbeitenden Werkstücks (P) in einer Vorwärtsrichtung (X) von der Eingangsstation (1) zur Ausgangsstation (2);
eine Dekorationseinheit (5), die in der Lage ist, eine Dekoration auf dem Werkstück (P) auszuführen; und
mindestens eine Bearbeitungseinheit (4), insbesondere eine Schleifeinheit, des Werkstücks (P), die in Bezug auf die Fördergruppe (3) erhöht angeordnet ist und mindestens ein Bearbeitungswerkzeug (41), insbesondere zum Schleifen des Werkstücks (P), umfasst.

11. Anlage (I') nach einem der Ansprüche 4-9, **dadurch gekennzeichnet, dass** die Maschine (M') umfasst:
eine Eingangsstation (1) für den Eingang des zu bearbeitenden Werkstücks (P) und eine Ausgangsstation (2) für den Ausgang des bearbeiteten Werkstücks (P);
eine Fördergruppe (3) zum Bewegen des zu bearbeitenden Werkstücks (P) in einer Vorwärtsrichtung (X) von der Eingangsstation (1) zur Ausgangsstation (2); und
eine Dekorationseinheit (5), die in der Lage ist, eine Dekoration auf dem Werkstück (P) auszuführen.

12. Anlage (I, I') nach einem der Ansprüche 4-11, **dadurch gekennzeichnet, dass** die Dekorationseinheit (5) eine Laserquelle oder ein Druckkopf oder eine Lackiereinheit ist.

13. Maschine zur Bearbeitung eines Werkstücks (P) aus Holz, Kunststoff, Glas, Glasfaser, Metall, Keramik, umfassend:
eine Eingangsstation (1) für den Eingang des zu bearbeitenden Werkstücks (P) und eine Ausgangsstation (2) für den Ausgang des bearbeiteten Werkstücks (P);
eine Fördergruppe (3) zum Bewegen des zu bearbeitenden Werkstücks (P) in einer Vorwärtsrichtung (X) von der Eingangsstation (1) zur Ausgangsstation (2);
**dadurch gekennzeichnet, dass** sie ferner eine Dekorationseinheit (5) umfasst, die in der Lage ist, eine Dekoration auf dem Werkstück (P) auszuführen, wobei die Dekoration ein Abtragen von Material mittels einer Laserquelle oder ein Druck mittels eines Druckkopfes oder eine Lackierung ist, und eine Press- oder Laminiereinheit (L), die in der Lage ist, eine Schicht aus edlem Material (N) auf das dekorierte Werkstück (P) zu pressen.

## Revendications

1. Procédé d'usinage d'une pièce (P) en bois, plastique, verre, fibre de verre, métal, céramique, comprenant les étapes suivantes:
*a.* fourniture d'une pièce (P) à travailler dans une installation de travail (I, I'), selon une direction d'avancement (X);
*b.* décoration de la pièce (P), au moyen d'une unité de décoration (5), selon un programme de décoration prédéterminé, le long d'une direction de travail (Y), orthogonale à ladite direction d'avancement (X), tandis que ladite pièce (P) se déplace le long de ladite direction d'avancement (X), ladite décoration étant un enlèvement de matière au moyen d'une source laser, ou une impression au moyen d'une tête d'impression, ou une peinture; et
*c.* après ladite étape *b.,* le pressage d'une couche de matériau noble (N) sur ladite pièce décorée (P), au moyen d'une unité de pressage ou de laminage (L).

2. Procédé selon la revendication précédente, **caractérisé en ce qu'**il comprend l'étape suivante:
*b1.* détection de la qualité de la décoration réalisée à ladite étape b., si la décoration correspond au programme de décoration prédéterminé, réalisation de ladite étape *c.*

3. Procédé selon l'une quelconque des revendications précédentes, **caractérisé en ce qu'**il comprend l'étape suivante:
*a1.* détection des caractéristiques de la pièce (P) à travailler, et/ou d'une donnée d'entrée, et sélection du programme de décoration à réaliser.

4. Installation d'usinage (I, I') pour le travail d'une pièce (P) en bois, plastique, verre, fibre de verre, métal, céramique, **caractérisée en ce qu'**elle
comprend une machine (M, M') capable d'effectuer une décoration sur une pièce (P) au moyen d'une unité de décoration (5), ladite décoration étant un enlèvement de matériau au moyen d'une source laser, ou une impression au moyen d'une tête d'impression ou une peinture, et
**en ce qu'**elle comprend une unité de pressage ou de laminage (L) capable de presser une couche de matériau noble (N) sur ladite pièce décorée (P).

5. Installation (I, I') selon la revendication précédente, **caractérisée en ce qu'**elle comprend un second dispositif de détection (7) disposé entre ladite machine (M, M') et ladite unité de pressage ou de laminage (L) capable de détecter la qualité de la décoration réalisée sur ladite pièce (P).

6. Installation (I, I') selon l'une quelconque des revendications 4 ou 5, **caractérisée en ce qu'**elle comprend un premier dispositif de détection (6) disposé à l'entrée de ladite machine (M, M'), apte à détecter les caractéristiques de ladite pièce (P).

7. Installation (I, I') selon l'une quelconque des revendications 4-6, **caractérisée en ce qu'**elle comprend une unité logique de commande (U) dans laquelle sont mémorisés des programmes de décoration à effectuer sur ladite pièce (P).

8. Installation (I, I') selon la revendication précédente, lorsqu'elle dépend de la revendication 5, **caractérisée en ce que** ladite unité de commande logique (U) est capable de recevoir des signaux correspondant à la qualité de la décoration détectée par ledit dispositif de détection (7) et d'envoyer en conséquence ladite pièce à ladite unité de pressage ou de laminage (L).

9. Installation (I, I') selon la revendication 7, lorsqu'elle dépend de la revendication 6, **caractérisée en ce que** ladite unité logique de commande (U) est capable de recevoir des signaux correspondant aux caractéristiques détectées par ledit premier dispositif de détection (6) et de sélectionner en conséquence le programme de décoration à exécuter sur ladite pièce (P).

10. Installation (I) selon l'une quelconque des revendications 4 à 9, **caractérisée en ce que** ladite machine (M) comprend:
un poste d'entrée (1) pour l'entrée de ladite pièce (P) à travailler et un poste de sortie (2) pour la sortie de ladite pièce (P) travaillée;
un groupe convoyeur (3) pour déplacer ladite pièce (P) à travailler, selon une direction avant (X), de ladite station d'entrée (1) vers ladite station de sortie (2);
une unité de décoration (5) capable d'effectuer une décoration sur ladite pièce (P);
et au moins une unité de travail (4), notamment de ponçage, de ladite pièce (P), disposée en hauteur par rapport audit groupe de convoyage (3) comprenant au moins un outil de travail (41), notamment pour le ponçage de ladite pièce (P).

11. Installation (I') selon l'une quelconque des revendications 4 à 9, **caractérisée en ce que** ladite machine (M') comprend:
un poste d'entrée (1) pour l'entrée de ladite pièce (P) à travailler et un poste de sortie (2) pour la sortie de la pièce (P) travaillée;
un groupe convoyeur (3) pour déplacer ladite pièce à travailler (P), selon une direction avant (X), de ladite station d'entrée (1) vers ladite station de sortie (2);
et une unité de décoration (5) capable de réaliser une décoration sur ladite pièce (P).

12. Installation (I, I') selon l'une quelconque des revendications 4 à 11, **caractérisée en ce que** ladite unité de décoration (5) est une source laser ou une tête d'impression ou une unité de peinture.

13. Machine pour le travail d'une pièce (P) en bois, plastique, verre, fibre de verre, métal, céramique, comprenant :
un poste d'entrée (1) pour l'entrée de ladite pièce (P) à travailler et un poste de sortie (2) pour la sortie de la pièce (P) travaillée;
un groupe convoyeur (3) pour déplacer ladite pièce (P) à travailler, selon une direction avant (X), de ladite station d'entrée (1) vers ladite station de sortie (2);
**caractérisé en ce qu'**il comprend en outre une unité de décoration (5) capable d'effectuer une décoration sur ladite pièce (P), dans laquelle ladite décoration est un enlèvement de matériau au moyen d'une source laser, ou une impression au moyen d'une tête d'impression ou une peinture et une unité de pressage ou de laminage (L) capable de presser une couche de matériau noble (N) sur ladite pièce décorée (P).
